# EUROPEAN PATENT APPLICATION

(11) **EP 1 914 100 A1**
(43) Date of publication of application: **23.04.2008**
(21) Application number: 07253637.8
(22) Date of filing: 13.09.2007
(51) Int. Cl.: B60J 10/08

(54) **Window frame for a vehicle door**

(30) Priority: 27.09.2006 JP 2006262863
(71) Applicant: AISIN SEIKI KABUSHIKI KAISHA, Kariya-shi, Aichi-ken 448-8650 (JP)
(72) Inventor: Takeuchi, Katsuhiko, c/o Aisin Seiki K.K., Kariya-shi, Aichi-ken 448-8650 (JP); Yamasaki, Hiroaki, c/o Aisin Seiki K.K., Kariya-shi, Aichi-ken 448-8650 (JP)
(74) Representative: Albutt, Anthony John

(57) **Abstract**

A doorframe (1) includes a sash portion (5) exposed to an exterior side of a body (B) wherein the two layers are welded at an adjacent part of a base portion of the supporting portion (6), a recess (1b) formed continuously from the sash portion (5) so as to define a channel (1a) and supporting a glass run (3) in an elastic contact with a door glass (2) for sealing when the door glass (2) is closed, and a supporting portion (6) formed continuously from the sash portion (5) and supporting a door weather strip (4) in close contact with the body (B) for sealiuag when the door (D) is closed, wherein the supporting portion (6) is positioned at a position other than an inner surface of a sash portion (5).

## Description

### FIELD OF THE INVENTION

The present invention relates to a doorframe. In detail hereafter, the present invention relates to improvement of doorframe arrangements provided on doors or the like for vehicles or the like.

### BACKGROUND

A door for a vehicle such as a passenger vehicle, except so-called sash-less type door, is generally provided with a doorframe including a glass frame or the like. The doorframe has an integral construction activated with the door to open and close. Such doorframe has functions such as a guide for moving a door glass upward and downward, a seal between the door and a body of a vehicle when the door is closed, or the like.

Generally, such doorframe is provided with a glass run in elastic contact with the door glass for sealing when the door glass is closed, a door weather strip in close contact with the body of the vehicle for sealing when the door is closed, or the like. The glass run is an elastic member made of for example rubber and firmly attaches to an adjacent part of an edge of the door glass. The glass run is in contact with the door glass to seal a clearance between the door glass and the doorframe when the door glass is slid to the upper rim thereof Moreover, the door weather strip is an elastic member made of for example rubber and is provided inside the doorframe. The door weather strip is firmly attached to the body and the doorframe to seal a clearance therebetween when the door is closed. Furthermore, force for extruding the door glass to a vehicle external side due to effect of airflow is generated while the vehicle is running. When such force is applied on the doorframe, the doorframe requires a certain level of rigidity to prevent deterioration of sealing performance of the glass run or the like (for example, the deterioration is caused by detachment or the like of the glass run from the doorframe due to deformation of the doorfiame).

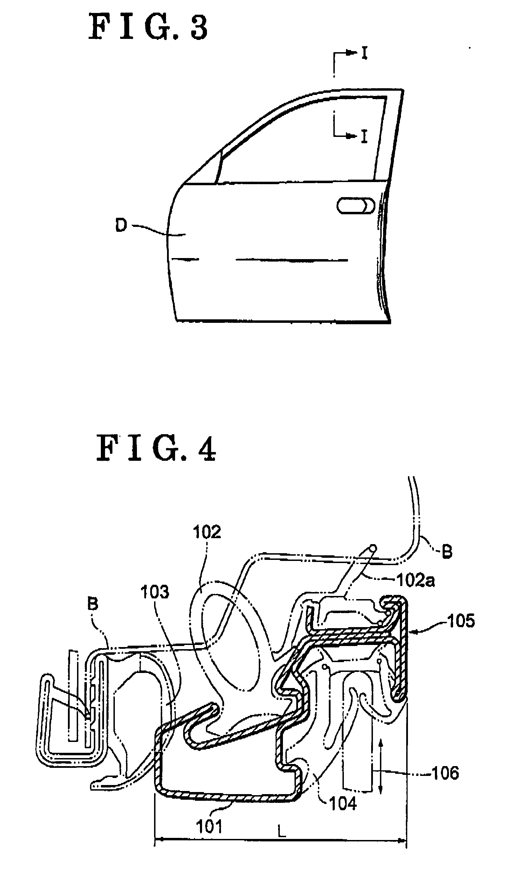

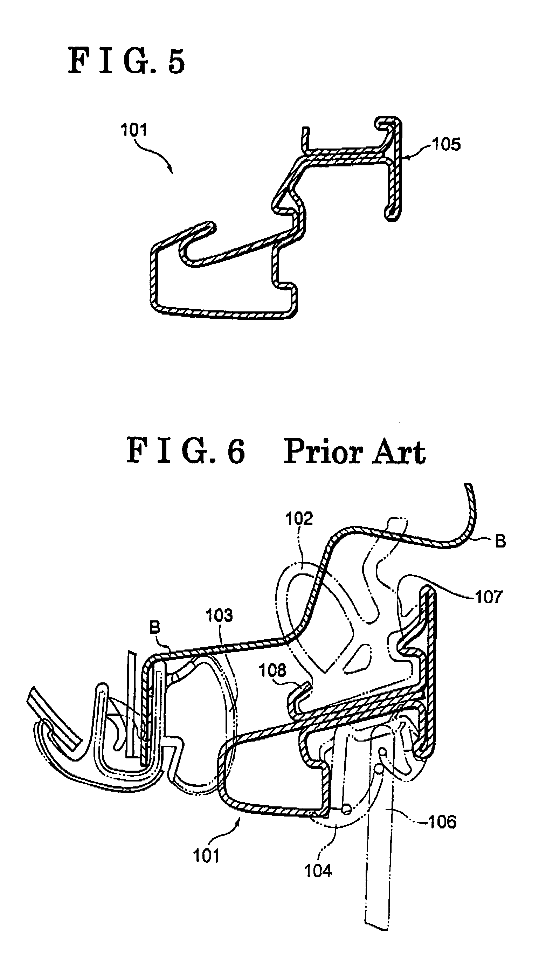

An example of a conventional doorframe is described below (see Fig. 4). Namely, the conventional doorframe includes a double sealing construction of a bending-type door weather strip 102 with high sealing performance and an opening weather strip 103 positioned closer to a vehicle interior side than the weather strip 102. Furthermore, the conventional doorframe includes a parting weather strip 102a (a part of the door weather strip 102) in a parting clearance relative to a body B located at the outmost side of the vehicle. The parting weather strip 102a is provided for the purpose of obtaining better appearance and sealing performance. For example, as disclosed in JP 1999-334367A, when each component (the door weather strip 102, the opening weather strip 103, the paring weather strip 102a, and a glass run 104) is mounted on the conventional doorframe having such construction while the sealing performance or better appearance is satisfied and when a cross-section with a sash portion 105 (appearance design) exposed to a vehicle exterior side within a doorframe 101 is formed by rolling process, the conventional doorframe may be configured to be a cross-sectional construction where the sash portion 105 is integrally formed with the whole of the doorframe 101 (see Figs. 4 and 5).

However, recent requirements have led to the doorframe 101 having such cross-sectional construction as follows.

Firstly, from a viewpoint of appearance (apparent, fineness), a thin frame-width is required for the sash portion 105 (appearance design) exposed to the vehicle exterior side, by reducing certain width dimensions of the sash portion 105. Regarding this point, when the width of the sash portion 105 is reduced in the doorframe 101 having the foregoing construction, it is naturally difficult to locate both the door weather strip 102 and the glass run 104 behind an inner surface of the sash portion 105. Accordingly, the door weather strip 102 and the glass run 104 should be arranged in parallel with each other in a vehicle-width direction (in a direction approximately perpendicular to a glass surface of the door glass 106). However, a vehicle-width dimension (dimension L shown in Fig. 4) on a frame cross-section further increases due to such parallel arrangement, thus increasing thickness of the doorframe 101 in the vehicle-width direction. Consequently, a vehicle interior space decreases generating oppressive feeling for passengers. Furthermore, mass or cost of the doorframe 101 or the door increases

Secondly, the above-mentioned cross-sectional construction is complicated because of many bending points, thus increasing the number of stages (rolling stages) in a rolling process during forming. In this way, when the number of processes (rolling stages) is large, the followings may occur:
- An appropriate roll die for each rolling process is required;
- Expensive cost of dies;
- Long time is required for accuracy estimation and tuning;
- High technical skill is required for modeling;
- More space is required at plant.
Consequently, any of the above descriptions may disturb production preparation periods, accuracy management, or the like.

In order to fulfill the above-mentioned requirements, various studies are conducted for the conventional doorframe 101. As explained above, the vehicle-width dimension (L dimension in Fig. 4) of the door&ame 101 increases when the door weather strip 102 and the door glass run 104 are arranged in the vehicle-width direction in order to obtain a slimmer shape of the sash portion 105 (appearance design). On this point, arrangement of the door the vehicle- weather strip 102 and the glass run 104 for example in the vertical direction (longitudinal direction) prevents the width dimension of the doorframe 101 from being increased (see Fig. 6).

However, two projecting portions formed from a rolled member are provided in the above- mentioned conventional doorframe 101 having such cross-sectional construction in order to securely support the door weather strip 102. One projecting portions is a bead-shaped projecting portion 107 (beaded projecting portion) arranged on the inner surface of the sash portion 105 (appearance design) within the doorframe 101. The other projecting portion is a hook-shaped projecting portion 108 (hooked projecting portion) formed by folding an edge of the rolled member. A part of the weather strip 102 is arranged between the bead-shaped projecting portion 107 and the hook-shaped projecting portion 108. In addition, the door weather strip 102 is often provided to fit into a recess of a channel defined between both the foregoing projecting portions 107, 108. In this case, the sash portion 105 needs a certain width in order to arrange the beaded projecting portion 107. Accordingly, it is difficult to reduce the width of the doorframe by reducing the width of the sash portion 105 (appearance design).

A need thus exists for a doorframe, which realizes a compact and simple construction having high sealing performance or apparent fineness of a sash portion (appearance design) required for the doorframe.

### SUMMARY OF THE INVENTION

According to an aspect of the present invention, a doorframe includes a glass run in elastic contact with a door glass for sealing when the door glass is closed and a door weather strip is in close contact with a body for sealing when the door glass is closed. The doorframe is provided with a supporting portion supporting the weather strip arranged at a position other than an inner surface of a sash portion exposed to an exterior side of a body.

The doorframe includes the supporting portion arranged at the portion other than the inner surface of the sash portion and supporting the door weather strip. Accordingly, it is not necessary to arrange a beaded projecting portion or the like on the inner surface of the sash portion, thereby realizing the sash portion that is smaller (slimmer) in width than a conventional sash portion which is larger due to the beaded projecting portion. Consequently, the sash portion achieves better apparent fineness than the conventional sash portion. In this case, the doorframe forming a compact and simple construction is realized by arranging the supporting portion at a single portion.

Furthermore, the supporting portion forms an approximate T-shaped cross-section.

For example, even when the supporting portion is positioned at a single portion, such simple construction surely supports the door weather strip.

Moreover, the doorframe according to the present invention is formed from a rolled member. The supporting portion exhibits the approximate T-shaped cross-section with both edges of the rolled member.

In this case, the door weather strip is supported by the supporting portion formed with the both edges of the rolled member exhibiting the approximate T-shaped cross-section.

Moreover, the doorframe is preferably provided wherein the rolled member is folded into at most two layers.

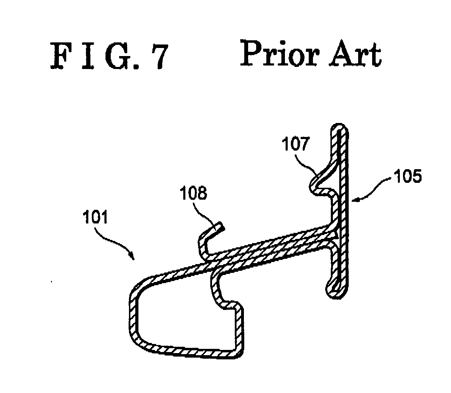

For example, in the above-mentioned conventional doorframe where a part of the door weather strip is shut between the beaded projecting portion and the hooked projecting portion, the doorframe may be provided wherein a rolled member is folded into three layers at the intermediate part when the hooked projecting portion is arranged by using the both edges of the rolled member in order to achieve a certain degree of strength (for example, see Fig. 7). On the other hand, in the doorframe according to the present invention, the supporting portion is arranged by bending the both edges of the rolled member in a vehicle-width direction. Accordingly, even when the doorframe has at most two-layer construction, strength is easily achieved. In addition, since the doorframe forming the two-layer construction has a smaller cross-sectional area than that of the doorframe forming the three-layer construction, a certain large section modulus is easily secured relative to the cross-sectional area. That is, the doorframe with the two layers easily achieves higher strength with regard to the amount of material used, therefore realizing an effective construction relative to external force such as bending force or the like while establishing a lightweight construction.

The doorframe I is preferably further provided wherein the rolled member is welded at an adjacent part of a base portion of the supporting portion.

For example, in the case of the two-layer construction formed from the rolled member, the rolled member is welded at the adjacent portion of the base portion of the supporting portion, thereby realizing a simple connection.

### BRIEF DESCRIPTION OF THE DRAWINGS

The foregoing and additional features and characteristics of the present invention will become more apparent from the following detailed description considered with reference to the accompanying drawings, wherein:

Fig. 1 illustrates an embodiment of a doorframe according to the present invention and is a cross-sectional view illustrating the doorframe, a vehicle body, and other portions taken from a line II of a door shown in Fig. 3;

Fig. 2 is a cross-sectional view illustrating the doorframe only taken out of cross-sectional view of Fig. 1;

Fig. 3 is a view illustrating a vehicle side door with the doorframe;

Fig. 4 is a cross-sectional view illustrating an example of a conventional doorframe, a conventional vehicle body, and other portions.

Fig. 5 is a cross-sectional view illustrating the doorframe only taken out of the cross-sectional view of Fig. 4;

Fig. 6 is a cross-sectional view illustrating another example of the doorframe, the vehicle body, and other portions; and

Fig. 7 is a cross-sectional view illustrating the doorframe only taken out of the cross-sectional view of Fig. 6.

### DETAILED DESCRIPTION

An embodiment of the present invention will be explained with reference to the illustrations of the drawing figures as follows.

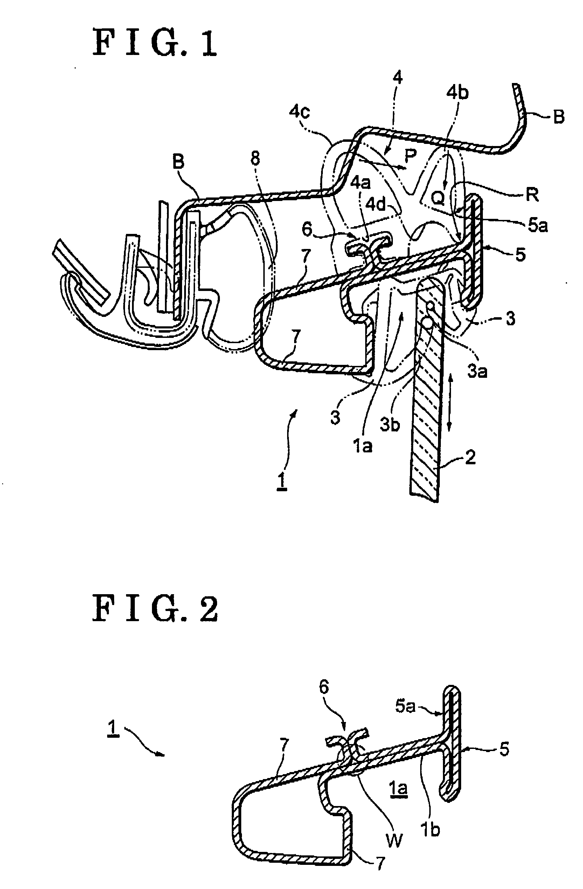

Figs. 1 through 3 illustrate a doorframe 1 according to the embodiment. The doorframe 1 according to the embodiment includes a glass run 3 in elastic contact with a door glass 2 for sealing when the door glass 2 is closed. The doorframe 1 also includes a door weather strip 4 in close contact with a body B for sealing when a door D is closed. Furthermore, the doorframe 1 according to the embodiment is configured to include a projecting supporting portion 6 for supporting the weather strip 4. The projecting supporting portion 6 is provided at the doorframe 1 at a position other than an inner surface of a sash portion 5 exposed to an exterior ambience of the body B. The doorframe 1 according to the embodiment applied to the door D for a passenger vehicle will be explained below (see Fig. 3).

The door glass 2 is positioned in a window area of the door D and serves as a window glass for example electrically operated to move upward and downward. Fig. 1 illustrates an upper portion of the door glass 2 moved to the top position, indicated by a double-dashed line. As illustrated, the doorframe 1 is provided with a channel 1a including a recess 1b into which an upper rim of the door glass 2 is fitted. The glass run 3 is arranged so as to be fitted in the recess 1b of the channel 1a.

The glass run 3 is a sealing member for sealing the door glass 2. The glass run 3 is for example made of rubber and arranged in the recess 1b of the channel 1a of the doorframe 1 (see Fig. 1). For example, the glass run 3 according to the embodiment includes a lip portion 3a contacting a surface of the door glass 2 at the vehicle exterior side and a lip portion 3b contacting a surface of the door glass 2 at the vehicle interior side.

The door weather strip 4 is formed by an elastic member such as rubber for sealing a clearance between the doorframe 1 and the body B. Furthermore, the door weather strip 4 includes a recess 4a to be supported by the projecting supporting portion 6 of the doorframe 1. For example, in the case of the embodiment, the recess 4a forms an approximate T-shaped groove so that the projecting supporting portion 6 of an approximate T-shaped cross section is fitted into the recess 4a (see Fig. 1). In addition, an approximate circular recess 4d is arranged next to the recess 4a and closer to the vehicle exterior side than the concave portion 4a is.

Moreover, the door weather strip 4 includes two projecting sealing portions 4b, 4c each having a hollow portion (see Fig.1). In these projecting sealing portions 4b, 4c, the projecting sealing portion 4b is located closer to the vehicle exterior side. The projecting sealing portion 4b serves as a parting portion when being in contact with a part of the body B (for example, a rimmed ceiling surface accommodating the doorframe 1) to shut out air or noise. Additionally, the projecting sealing portion 4c is located closer to the vehicle interior side. The projecting sealing portion 4c is for example formed larger than the above-mentioned projecting sealing portion 4b. When the door D is closed, the projecting sealing portion 4c is configured to deform more than the projecting sealing portion 4b for example when being in contact with a crank-shaped cross-section of the body B (see Fig. 1). In this way, the door weather strip 4 according to the embodiment is configured to be in contact with the body B at the two projecting sealing portions 4b, 4c to seal a clearance between the doorframe 1 and the body B.

The doorframe 1 according to the embodiment is configured as a door glass frame forming an approximate upper half part of the side door D for a vehicle or the like (for example, a passenger vehicle in the case of the embodiment). In such doorframe 1, a portion exposed to the exterior side of the body B (referred to as the sash portion 5 in the patent specification) when the door D is closed, is formed from a rolled member 7 by roll forming process so that the portion forms for example an approximate T-shaped cross-section (see Figs. 1 and 2).

Furthermore, the doorframe 1 includes the projecting supporting portion 6 for supporting the door weather strip 4. In this regard, the projecting supporting portion 6 according to the embodiment is provided at the doorframe 1 at the position other than the inner surface of the sash portion 5. For example, the projecting supporting portion 6 is located closer to the vehicle interior side than the inner surface of the sash portion 5 in an inner side of the body B and about behind the channel 1a (see Fig. 1). Moreover, in the embodiment, the projecting supporting portion 6 is positioned at a single portion to support the door weather strip 4 so as not to be detached. In particular, the projecting supporting portion 6 is formed into the approximate T-shaped cross-section, thereby supporting the door weather strip 4 in the fitted condition into the recess 4a of the door weather strip 4 (see Fig. 1).

As described above, since the projecting supporting portion 6 having the approximate T-shaped cross-section is applied in the embodiment, a single supporting means positioned at one location of the doorframe 1 supports the door weather strip 4 not so as to detach. Accordingly, it is not necessary to provide for example a beaded projecting portion or the like on the inner surface of the sash portion 5 in the embodiment as provided in the conventional doorframe. Consequently, the sash portion 5 (where the door weather strip 4 is positioned) as illustrated in Fig. 1 or Fig. 2 is configured to have a surface with no projecting portion or the like on the inner surface. As a result, in the case of the doorframe 1 according to the embodiment, the sash portion 5 is smaller in width and forms a slimmer shape compared to the sash portion of the conventional doorframe that is larger due to the projecting portion being on the inner surface. Consequently, higher apparent fineness of the sash portion 5 is taken into consideration in the doorframe 1 compared to the conventional doorframe.

Furthermore, the doorframe 1 is formed from the rolled member 7 in the embodiment (see Fig. 1). The rolled member 7 is formed into a shape illustrated using roll forming process by which specific portions thereof are bended. In addition, both edges of the rolled member 7 are processed to be bent in the vehicle-width direction, thereby forming the T-shaped cross-section of the projecting supporting portion 6. Hereby, the supporting member 6 is provided by utilizing the rolled member 7. In addition, the rolled member 7 with the T-shaped cross-section at the both edges has advantage of being formed more easily than the case where a projecting supporting portion is formed in the intermediate part of the rolled member 7. In the doorframe 1 according to the embodiment, the projecting supporting portion 6 positioned at a single portion has a relatively simple construction, thereby surely supporting the door weather strip 4.

Moreover, in the doorframe 1 according to the embodiment, the rolled member 7 is folded into at most two layers (see Fig. 1). In other words, as described above, both of the starting and end edges of the rolled member 7 are bent in the vehicle-width direction to form the projecting supporting portion 6 in the embodiment. Further, the two layers are arranged in the intermediate part of the rolled member 7, thereby realizing the doorframe 1 with a specified cross-sectional shape while strength is secured thereof. Consequently, as compared to the conventional doorframe formed from a rolled member for example folded into three layers in an intermediate part thereof the doorframe 1 is lighter in weight and maintains strength since the cross-section is reduced while keeping the specified strength. Moreover, although the cross-section of the doorframe 1 is reduced from that of the conventional doorframe, cross-sectional ratios in an adjacent area around a centroid and an area distant from the centroid increase in the doorframe 1, therefore realizing a cross sectional construction with a large section modulus. That is, in spite of the amount of material used in the doorframe 1, higher strength is easily achieved, therefore realizing an effective construction relative to external forces such as bending force or the like while a lightweight construction is realized.

Furthermore, in the embodiment, the rolled member 7 is welded at an adjacent part of a base portion of the projecting supporting portion 6 (see "W" shown in Fig. 2). In this way, when the approximate T-shaped cross-section of the projecting supporting portion 6 (that has a shape resembling two joined palms) is secured for example by laser welding process so that the rolled member 7 is secured at one location. Consequently, operations required for welding are reduced.

In the doorframe 1 configured as described above, when the door D is closed, the door weather strip 4 is deformed as below. That is, when the door D is closed, the projecting sealing portion 4c close to the vehicle interior side is in contact with the crank-shaped body B to be pressed and deformed into a direction of the vehicle exterior side as indicated by "P". Moreover, in response to such movement of the projecting sealing portion 4c, the projecting sealing portion 4b next to the projecting sealing portion 4c receives a force towards the vehicle exterior side. In this way, when the projecting sealing portion 4b receives the force towards the vehicle exterior side, a part of the inner surface of the sash portion 5 serves as a presser portion for pressing the door weather strip 4 against the body B side (represented as "5a" as shown in the figure that indicates a portion serving as the presser portion). Furthermore, at this time, since the projecting sealing portion 4b in contact with the body B is pressed in a downward direction as indicated by "Q" in Fig. 1, the door weather strip 4 is pressed against the doorframe 1 in a position indicated by "R" to fulfill the sealing performance. Accordingly, when the door D is closed, the door weather strip 4 is pressed against both the body B and the doorframe 1, thereby sufficiently fulfilling the sealing performance.

In addition, the body B is further provided with an opening weather strip 8 serving as another sealing member (see Fig. 1). The opening weather strip 8 is positioned on the body B so as to be into contact with the closest part of the vehicle interior side within the doorframe 1. The opening weather strip 8 includes a hollow portion, which is similar to a hollow portion of the door weather strip 4. When the door D is closed, the opening weather strip 8 is shut and deformed between the doorframe 1 and the body B and thereafter fulfills the sealing performance in the pressed condition against both the doorframe 1 and the body B.

As described above, in the doorframe 1 according to the embodiment, the projecting supporting portion 6 is positioned at one location other than the sash portion 5 and supports the weather strip 4, thereby avoiding the need of providing a projection shaped like a bead-shaped projecting portion (beaded projecting portion) or the like on the inner surface of the sash portion 5 as provided in the conventional doorframe. Accordingly, the sash portion 5 is smaller in width and forms a slimmer shape than the conventional sash portion 105 that is larger due to the beaded projecting portion. Consequently, higher apparent fineness is achieved in the apparent design of the sash portion 5. Furthermore, since a crushing process for forming the beaded projecting portion or the like is not required, the processing costs are minimized.

Moreover, it is not necessary to locate the glass run 3 or the door weather strip 4 in a transverse direction (vehicle-width direction) as located in the conventional construction (see Fig. 4). For example, as illustrated in Fig. 1, even when the glass run 3 or the door weather strip 4 is located in a longitudinal direction (vertical direction), a compact construction is realized as a whole. Consequently, the vehicle-width direction (dimension L) in a frame section is reduced, thereafter decreasing thickness of the doorframe 1 and effectively preventing a vehicle interior space from decreasing generating oppressive feeling for passengers. Furthermore, mass or cost of the doorframe 1 or the door D is also prevented from increasing.

Moreover, in the embodiment, the rolled member 7 is folded into at most two-layer cross-sectional construction, therefore minimizing the cross-section as well as maintaining the strength and large section modulus thereof Compared to the three-layer construction, the number of layers is less and the cross-section shape is simplifed in the embodiment. Furthermore, the number of stages in the rolling process is also reduced, thereby avoiding applying an appropriate roll die for each rolling process. Costs of dies are reduced. The time required for accuracy estimation or tuning is reduced. A high technical skill required for modeling is not required. Space required at plant decreases. Consequently, production preparation periods, accuracy management, or the like are prevented from being disturbed.

In addition, the embodiment described above is an example of preferred embodiments but is not limited thereto. The embodiment may be modified and practiced in various ways without departing from the scope of the summary of the present invention. For example, the case of the side door D for the passenger vehicle is explained in the embodiment but is illustrative only. The door D for other various vehicles or the like may be applied in the embodiment.

## Claims

1. A doorframe (1) comprising:
a sash portion (5) exposed to an exterior side of a body (B);
a recess (1b) formed continuously from the sash portion (5) so as to define a channel (1a), the recess (1b) supporting a glass run (3) in an elastic contact with a door glass (2) for sealing when the door glass (2) is closed; and
a supporting portion (6) formed continuously from the sash portion (5) and supporting a door weather strip (4) in close contact with the body (B) for sealing when the door (D) is closed, wherein the supporting portion (6) is positioned at a position other than an inner surface of a sash portion (5).

2. The doorframe (1) according to Clam 1, wherein the supporting portion (6) is formed at a single portion.

3. The doorframe (1) according to Claim 1, wherein the supporting portion (6) is formed with a T-shaped cross-section.

4. The doorframe (1) according to Claim 2, wherein the supporting portion (6) is formed with a T-shaped cross-section.

5. The doorframe (1) according to Claim 3, wherein the doorframe (1) is formed from a rolled member (7), and the supporting portion (6) exhibits the T-shaped cross-section with both edges of the rolled member (7) bent in a width direction of the doorframe.

6. The doorframe (1) according to Claim 4, wherein the doorframe (1) is formed from a rolled member (7), and the supporting portion (6) exhibits the T-shaped cross-section with both edges of the rolled member (7) bent in a width direction of the doorframe.

7. The doorframe (1) according to Claim 5, wherein the rolled member (7) is folded into at most two layers.

8. The doorframe (1) according to Claim 6, wherein the rolled member (7) is folded into at most two layers.

9. The doorframe (1) according to Claim 7, wherein the two layers are welded at an adjacent part of a base portion of the supporting portion (6).

10. The doorframe (1) according to Claim 8, wherein the two layers are welded at an adjacent part of a base portion of the supporting portion (6).
